# EUROPEAN PATENT SPECIFICATION

(11) **EP 1 686 820 B1**
(45) Date of publication and mention of the grant of the patent: **17.09.2008**
(21) Application number: 05250476.8
(22) Date of filing: 28.01.2005
(51) Int. Cl.: H04Q 7/38

(54) **Apparatus, and associated method, for facilitating selection by a mobile node of a network portion to communicate to effectuate a selected communication service**
Vorrichtung, und entsprechendes Verfahren, zum Erleichtern der Auswahl eines Netzteiles durch einen mobilen Knoten zum Ausführen eines ausgewählten Kommunikationsdienstes
Appareil, et procédé associé, pour faciliter la sélection d'une partie de réseau par un noeud mobile pour effectuer un service de communication sélectionné

(43) Date of publication of application: 02.08.2006
(60) Divisional application: 08160040.5
(73) Proprietor: Research In Motion Limited, Waterloo, Ontario N2L 3W8 (CA)
(72) Inventor: Buckley, Adrian, Tracy, California 95376 (US); Alfano, Nicholas P., Warwichshire CV37 6SE (US)
(74) Representative: Roberts, Gwilym Vaughan

(56) References cited:
- WO-A-02/076131
- US-A- 5 983 115
- US-A1- 2002 039 892
- US-A1- 2004 198 360

## Description

The present invention relates generally to a manner by which to facilitate selection, at a mobile node, of a network portion of a network having a plurality of network portions with which to effectuate a selected communication service. More particularly, the present invention relates to apparatus, and an associated method, by which to select the network portion based upon whether the network portion is capable of operation to effectuate the selected communication service and upon preference levels defined at the mobile node and associated with different ones of the network portions.

A database is maintained at the mobile node. The database defines lists, each containing entries identifying network portions of common preference levels together with communication service capabilities of the networks. The database is accessed when a communication service is to be effectuated. And, selection is made at the mobile node of with which network portion to effectuate communications by accessing one or more of the lists, as needed, to identify and select the network portion that is capable of effectuating the selected communication service.

### Background of the Invention

Many different types of communication systems have been developed and deployed, available for use to effectuate many different types of communication services. Many varied communication services are effectuated through use of different ones of the communication systems. Many of such communication services are practical necessities for many. And, ready access to communicate by way of an appropriate communication system is correspondingly necessary.

Improved, and additional types of, communication services shall likely become available as technological advancements warrant. When technological advancements are implemented in communication systems, the communication systems generally provide for more efficient communication of data, communication of data at higher communication rates, or communication of data in manners that better provide for successful communication of the data when communicated in adverse communication conditions. Many modem communication systems make use of digital communication techniques. Use of digital communication techniques provides various advantages that facilitate successful communication of data between communication stations of a communication system. Improved communication efficiencies are possible as communication redundancies are able to be removed from data prior to its communication. When the data is free of redundancies, the informational content of the data is able to be communicated with reduced bandwidth allocations or in reduced amounts of time. Additionally, the data that is to be communicated is more readily manipulated, such as by encoding, to increase the likelihood that the informational content of the data is successfully communicated upon communication channels susceptible to communication degradation.

A radio communication system is an exemplary type of communication system and is exemplary of communication systems that utilize digital communication techniques. In a radio communication system, data is communicated between communication stations by way of radio channels. Radio channels are defined upon a portion of the electromagnetic spectrum. When the radio communication system is regulated by regulatory bodies, the portion of the electromagnetic spectrum at which the radio channels are defined is allocated to the communication system. The communication stations operable in the radio communication system include at least a sending station and a receiving station. The sending station operates to convert data that is to be communicated into a form to permit its communication upon a radio communication channel. And, the receiving station operates to detect the data communicated upon the communication channel and to recover the informational content of the detected data.

Because channels are defined upon the electromagnetic spectrum in a radio communication system, various advantages are provided by radio communication systems over their wireline counterparts. Because need for a wireline connection to interconnect the communication stations of a radio communication system are obviated, communication of data is effectuable between communication stations positioned at locations between which wireline connections are unable easily to be formed. And, freed of the need to interconnect the communication stations by way of fixed, wireline connections, a radio communication system is amenable for implementation as a mobile communication system. In a mobile communication system, one or more of the communication stations between which data is communicated is provided mobility.

A cellular communication system is a mobile communication system. In a typical cellular communication system, a communication network is formed of a plurality of fixed-site base transceiver stations. The base transceiver stations are deployed at spaced-apart locations throughout an area that is to be encompassed by the communication system. Cells are defined that are the coverage areas associated with individual ones of the base transceiver stations. Radio communications are effectuated between a mobile node and a base transceiver station in whose cell that the mobile node is positioned. The conventional cellular communication systems provide for telephonic communications by a user of the mobile node. Through appropriate positioning of the base transceiver stations, a mobile node is always positioned within relatively close proximity to at least one of the base transceiver stations when the mobile node is positioned within the area encompassed by the cellular communication system. Because of the proximity, only relatively low-powered signals are required to be communicated by the mobile node to effectuate communications.

Generally, cellular communication systems are operated in conformity with an operating specification promulgated by a standard-setting body. Successive generations of operating specifications have been promulgated, and successive generations of cellular communication systems have been deployed in conformity with such operating specifications.

The networks of more than one generation of cellular communication systems might, for instance, be deployed over a common, or overlapping, area and be concurrently operable to provide for radio communications with mobile nodes operable in the respective communication systems. And, separate networks, operated by separate network operators, of the same generation might also be deployed over a common, or overlapping, area, also to be operable concurrently.

Generally, a service subscription is purchased by a user of the mobile node, and the mobile node is authorized to communicate by way of a communication system pursuant to the service subscription. The mobile node is typically associated with a home network portion. The home network portion is typically a network portion that is installed to encompass an area in which the user of the mobile node is most regularly positioned. However, because a mobile node is inherently mobile, the user of the mobile node, carrying the mobile node, might well roam beyond the coverage area of the home network portion associated with the mobile node. When the mobile node roams beyond its home network, the mobile node might be positioned at a location encompassed by another network portion, a visited network.

When the mobile node roams beyond its home network, the mobile node is selectably permitted to communicate by way of one, or more, of the visited networks in whose coverage area that the mobile node roams. Permission to communicate by way of a visited network is dependent, among other things, upon whether the mobile node and the visited network operate pursuant to compatible operating specifications. Also, agreements between operators of the visited and home networks are additionally determinative of whether the mobile node is permitted to communicate by way of a particular visited network.

Additionally, the mobile node might roam into an area encompassed by more than one network, each of which is available to the mobile node through which to communicate. A decision is made as to which of the available networks that the mobile node communicates. Conventional mechanisms are used in the decision-making process, typically including use of a defined set of preferred roaming partners. An operator of the home network associated with the mobile node maintains a list of the preferred networks. When the mobile node roams into a visited network, the mobile node communicates by way of the network listed on the preferred list.

While, historically, cellular communication systems have provided merely telephonic voice communications, increasingly, cellular communication systems provide for packet data communication services. United States Patent Publication 2002/039892 discloses a system and method for selecting a network and service in a mobile communication station capable of accessing multiple access networks, wherein the availability of each of the access networks can be determined based on the requirements of the application requesting service, whereby a particular access network and service may thereafter be selected from the available access networks based on user preferences. Issued U.S. Patent 5,983,115 discloses a method for selecting a wireless communication service provider by locating a wireless service provider in a multi-service provider environment using a stored list of preferred service providers, the list having a plurality of uniquely identified sublists, each sublist being associated with a different geographic area and identifying a more preferred service provider and a less preferred service provider, and whereby information received from an initial service provider is used to select a sublist from the plurality of sublists, and a preferred service provider is selected by registering with an available service provider having a highest preference of available service providers as specified in the selected sublist.

United States Patent Publication 2004/198360 discloses a method for selection of a service provider network at a wireless subscriber device which includes: monitoring service provider network parameters of each of a plurality of available service provider networks, predicting performance capabilities of each of the available service provider networks, computing a performance metric for the available service provider networks based on desired performance parameters and on the predicting of performance capabilities, and selecting one of the available service provider networks based on the computed performance metric.

Legacy networks, providing only voice or limited data services, are deployed in areas in which new-generation cellular communication systems that provide for increasingly-intensive data communication services are also deployed. A mobile node, capable of communicating pursuant to a new-generation, data communication service must communicate by way of a network that provides for such new-generation packet communication service for the effectuation of such service. Accordingly, when selection is to be made of with which visited network that a mobile node is to communicate, the capability of the visited network must be taken into account. A manner by which to facilitate such selection is needed.

It is in light of this background information related to communications in a radio communication system that the significant improvements of the present invention have evolved.

### Summary of the Invention

According to a first aspect of the present invention there is provided an apparatus for a mobile node operable to effectuate at least a first selected communication service with a selected available network portion of a network formed of a first network portion and at least a second network portion, the first network portion capable of performing a first set of communication services and the at least the second network portion capable of performing a second set of communication services, said apparatus for facilitating selection, at the mobile node, with which, if any, of the first and at least second network portions to effectuate the first selected communication service as set out in independent claim 1.

According to a second aspect of the present invention there is provided a method of communicating in a radio communication system having a mobile node operable to effectuate at least a first selected communication service with a selected available network portion of a network formed of a first network portion and at least a second network portion, the first network portion capable of performing a first set of communication services and the at least the second network portion capable of performing a second set of communication services, said method for facilitating selection, at the mobile node with which, if any, of the first and at least second network portion to effectuate the first selected communication service as set out in independent claim 16.

Accordingly, the present invention advantageously provides apparatus, and an associated method, by which to facilitate selection, at a mobile node, of a network portion of a network having a plurality of network portions with which to effectuate a selected communication service.

Through operation of an embodiment of the present invention, a manner is provided by which to select the network portion with which to communicate based upon the network portion is capable of operation to effectuate the selected communication service and upon preference levels defined at the mobile node and associated with different ones of the network portions.

The mobile node maintains a database at which lists are defined. Each of the lists contains entries identifying network portions together with communication service capabilities of the identified networks. And, each list defines a preference level, associated with each of the identified networks forming the entries of each of the respective lists.

When a communication service is to be initiated by the mobile node, the mobile node makes a determination as to with which network portion that the mobile node shall attempt to communicate by way of which to effectuate the selected communication service. Selection is made, in part, responsive to access to one or more of the lists defined by the databases maintained at the mobile node. Because the lists include identification of the communication service capabilities of the network portions forming the entries of the lists, the mobile node is able to select a network portion with which to communicate on the basis, in part, upon whether the network portion supports the communication service that is to be effectuated. Network portions that do not support the communication service that is to be effectuated, and attempts to communicate with such network portions are not undertaken.

In one aspect of the present invention, first and at least second database listings are formed at the mobile node. Each of the database listings is formed of a set of entries of network portions. The entries of the set of entries forming the first database listings are each associated with a first level of preference by the mobile node with which to communicate. And, the second database listing is formed of a second set of entries of network portions. The network portions forming the entries of the second set are all associated with a second level of preference by the mobile node with which to communicate. Each of the network portions forming the entries of the first and at least second database listings further have associated therewith indications of the communication service capabilities of the network portions. That is to say, indexed together with the network portion identity is an indication of what communication services are able to be provided by the network portion.

In another aspect of the present invention, a detector detects which of the network portions are within communication range of the mobile node. That is to say, detection is made of within the coverage areas of which network portions that the mobile node is positioned. Detection is made, for instance, by detecting the broadcast signals broadcast by individual ones of the network portions. Broadcasts are made, for instance, by different ones of the network portions upon different channels. The mobile node tunes to the different ones of the channels upon which network portions broadcast signals and detects whether the broadcast signals are broadcast thereon. Through such detection, the mobile node is made aware of the network portions that are potentially available to the mobile node through which to communicate. A list of available network portions is formed, based upon the detections of the broadcast signals, or otherwise made by the detector. The available network portion list is compared when a selected communication service is to be initiated, with the entries contained in one or more of the database listings.

A selector, pursuant to, or responsive to, the comparisons between the available network portion list and the database listings selects with which of the network portions that the mobile node shall attempt to communicate, thereby to effectuate a selected communication service. Selection made by the selector selects a network portion that is available and that also is capable of providing the selected communication service.

In one implementation, the first database listing lists entries identifying network portions that are most-preferred with which to communicate, if possible. And, the entries of the second database listing identify the network portions that are less-preferred than the network portions identified in the first database listing. If no network portion listed on the first database listing is available and also is capable of providing the selected communication service, the second database listing is accessed, and the selector selects, if possible, a network portion contained in the second database listing with which to communicate to effectuate thereby the selected communication service.

In a further aspect of the present invention, a prohibited-network database listing is further maintained at the mobile node. The prohibited-network database listing contains a set of entries that identify network portions with which the mobile node is prohibited from using to effectuate communications. If a mobile node is positioned at a location encompassed by a coverage area of one of the network portions listed on the prohibited-network database listing,
the mobile node does not attempt to effectuate communications therewith. In this further aspect of the present invention, the selector also operates to prevent the mobile node from attempting to communicate with a network portion listed on the prohibited network database listing to effectuate the selected communication service.

In another aspect of the present invention, the communication service capabilities of the network portions identified in the different ones of the database listings identify the communication services that the associated network portions are capable of providing. In an alternate implementation, the tiers of service are defined. A tier of service is defined in terms of communication services of which a network portion is capable. For a network portion to be able to provide a selected tier of service, the network portion must be capable of providing all of the communication services that define the selected tier of service. Separate tiers of service are defined, each tier of which defining a separate set of communication services. When selection is to be made of with which network portion that the mobile node attempts to communicate to effectuate the selected communication service, selection is made based upon the tier of service associated with the network portion contained, and forming, the separate database listings.

Selection of the network portion with which the mobile node attempts to communicate to effectuate the selected communication service is thereby dependent upon availability of the network portion, the capability of the network portion to provide the selected communication service, and the level of preference associated with the network portion. If a network portion noted on a most-preferred list is capable of providing the selected communication service, the network portion is selected at the mobile node, and the mobile node attempts to communicate with the selected network portion. If communications cannot be effectuated or no network listed on the first database listing is both available and provides the communication service capability needed to effectuate the selected communication service, a database listing associated with less-preferred network portions with which to communicate is accessed and selection is made therefrom. Thereby, attempts to communicate with a network portion that is not capable of providing the selected communication service is not selected, and selection of a network portion with which to communicate is made from the less-preferred database listing.

In these and other aspects, therefore, apparatus, and an associated method, is provided for a radio communication system having a mobile node operable to effectuate at least a first selected communication service with a selected available network portion. The selected available network portion forms a portion of a network formed of a first network portion and at least a second network portion. The first network portion is capable of performing a first set of communication services, and in the least the second network portion is capable of performing a second set of communication services. Selection, at the mobile node, of with which, if any, of the first and at least second network portions to effectuate the first selected communication service is facilitated. A first database listing lists a first set of entries of network portions. Each entry of the first set of entries is associated with a first level of preference by the mobile node with which to communicate. At least a second database listing lists at least a second set of entries of network portions. Each entry of the second set of entries identifies network portions associated with a second level of preference by the mobile node with which to communicate. A selector is adapted to receive indications of when the mobile node is within coverage areas of the first and at least second network portions and adapted to access the first and at least second databases, respectively. The selector selects with which, if any, of the first and at least second network portions to effectuate the first selected communication service. Selection made by the selector is responsive to which, if any, of the first and at least second sets of communication services of which the first selected communication service is a member and with which of the first and at least second database listings that an associated one of the first and at least second network portions is associated.

A more complete appreciation of the present invention and the scope thereof can be obtained from the accompanying drawings that are briefly summarized below, the following detailed description of the presently-preferred embodiments of the present invention, and the appended claims.

### Brief Description of the Drawings

Figure 1 illustrates a functional block diagram of a radio communication system in which an embodiment of the present invention is operable.
Figure 2 illustrates an exemplary database listing at the mobile node, forming a portion of the radio communication system shown in Figure 1, pursuant to an embodiment of the present invention.
Figure 3 illustrates another exemplary database listing embodied at the mobile node forming a portion of the radio communication system shown in Figure 1, also pursuant to an embodiment of the present invention.
Figure 4 illustrates another exemplary database listing, also embodied at the mobile node forming a portion of the radio communication system shown in Figure 1, also pursuant to an embodiment of the present invention.
Figures 5A and 5B illustrate flow chart representative of operation of an embodiment of the present invention during operation of the communication system shown in Figure 1.
Figure 6 illustrates another flow chart, also representative of operation of the radio communication system pursuant to an embodiment of the present invention,
Figure 7 illustrates a method flow diagram listing the method steps of the method of operation of an embodiment of the present invention.

### Detailed Description

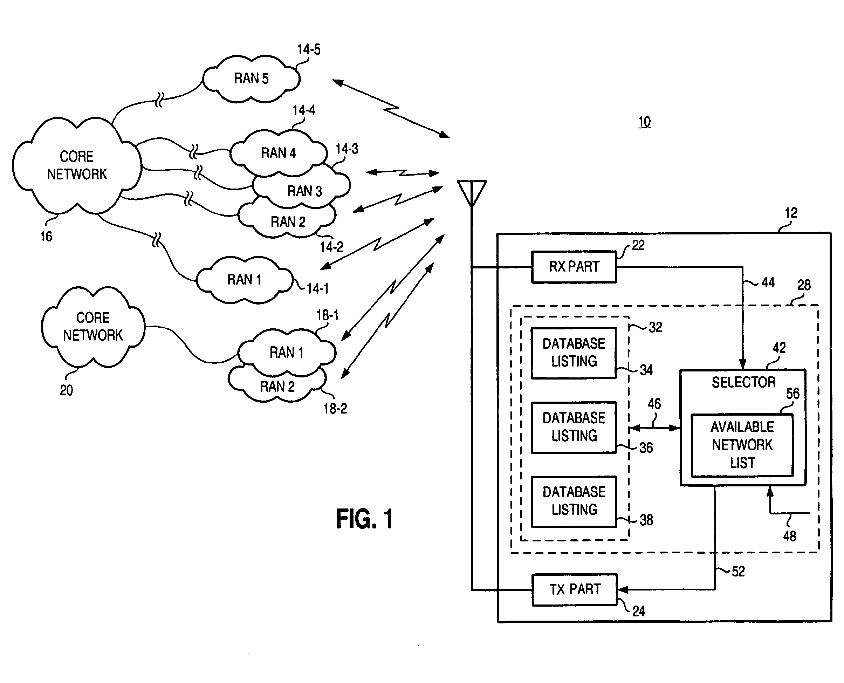

Referring first to Figure 1, a mobile radio communication system, shown generally at 10, forms a multi-user communication system in which mobile nodes positioned within a coverage area of a network part of the communication system are selectably permitted to communicate therethrough to effectuate selected communication services. A representative mobile node 12 is shown in the Figure. Other mobile nodes can analogously be represented.

The mobile nodes are permitted movement, here at least throughout the geographical area encompassed by the network of the radio communication system. Movement permitted of the mobile node includes movement during effectuation of a communication service. And, the mobile node is also operable to effectuate different communication services at different times, when positioned at different locations.

The mobile radio communication system is representative of any of various types of cellular, or other radio, communication systems. In the exemplary implementation, at least parts of the network of the communication system are operable to provide data services, such as data services provided by a GSM/GPRS/EDGE (Global System for Mobile communications/General Packet Radio Service/Enhanced Data for GSM Evolution)-compliant communication system. Other portions of the communication system are operable in conformity with other operating specifications and are capable of providing different communication services, such as data communication services provided by an IEEE 802.11-component network. Here, for purposes of explanation, the mobile node is also operable in general conformity with the GSM/GPRS/EDGE operating specification and with an IEEE 802.11 operating specification. And, accordingly, the mobile node is capable of communicating data pursuant to effectuation of a high-speed, variable-rate, packet communication service.

The following description shall describe exemplary operation of the mobile radio communication system with respect to an implementation in which the mobile node is a GSM/GPRS/EDGE-capable device and selected portions of the radio communication system are also GSM/GPRS/EDGE-capable. This implementation is exemplary only. In other implementations, e.g., the mobile node is operable pursuant to another operating specification and is of other communication service capabilities in such other implementations. Description of operation of the communication system, and the mobile node operable therein, is analogously described with respect to such other implementations.

The network of the radio communication system includes a first plurality of network portions, i.e., radio access networks 14. Here, five radio access networks, networks 14-1, 14-2, 14-3, 14-4, and 14-5, of the plurality are shown. Additional networks can also analogously be represented. The radio access network 14-1 forms a home network associated with the mobile node. The home network includes functional entities (not shown) that maintain, e.g., permanent registry information of the mobile node, as well as other information associated with the mobile node. Typically, when the mobile node is positioned at a location within the coverage area of the home network, the mobile node communicates by way of its home network.

As the mobile node is permitted mobility, the mobile node might travel beyond the coverage area of the home network and into the coverage area of another network. For instance, the mobile node is repositionable into an area encompassed by the networks 14-2, 14-3, 14-4, or 14-5. The radio access networks 14-2, 14-3, and 14-4 are deployed over at least partially overlapping areas and exhibit at least partially overlapping coverage areas. The radio access networks 14-2, 14-3, and 14-4 are representative of different types of radio access networks, i.e., networks that are constructed pursuant to different operating specifications or, e.g., generational variations of an operating technology, here variants of the GSM specification. The radio access network 14-5 is representative of another network that defines another coverage area into which the mobile node might roam.

The radio access networks 14-1 through 14-5 are appropriately interconnected, such as by way of a core network 16, or any other appropriate communication medium or fabric through which communication paths are formable.

The network further includes a second plurality of network portions, i.e., radio access networks 18. Here two radio access networks, networks 18-1 and 18-2, of the second plurality are shown. Additional networks 18 can analogously be represented.

The networks 18 are representative of, e.g., networks operable pursuant to a variant of the IEEE 802.11 set of operating specifications. The networks 18 are connected to, and interconnected by, a core network 20.

The core networks 16 and 20 provide various communication functions, performing, e.g., mobility tracking, packet routing, service broadcast information. Additionally, the core networks provide connectivity to terrestrial wide area networks such as a PSTN (public-switched telephonic network) and the Internet.

Because different ones of the radio access networks 14 are constructed to be in conformity with different operating specifications, the communication service capabilities of the different ones of the radio access networks differ. When, for instance, the mobile node is positioned at a location encompassed by the radio access networks 14-2, 14-3, and 14-4, the type of communication service that is to be effectuated by the mobile node might be supported by one of the radio access networks and not by another of the radio access networks.

The mobile node 12 includes radio transceiver circuitry, here indicated to include a receive part 22 and a transmit part 24. The receive part of the radio transceiver circuitry data communicated to the mobile node by the network of the radio communication system. The data communicated to the mobile node is communicated upon radio downlink channels that are defined upon radio air interface. And, the transmit part of the radio transceiver circuitry operates to transmit data sourced at the mobile node upon radio uplink channels that are defined upon the radio interface.

In addition to the communication service capabilities of individual ones of the radio access networks, preference sometimes is given to use of one radio access network over another as a result of arrangements between operators of different ones of the radio access networks. Roaming, and other, agreements between operators of different networks define preferred networks through which a roaming mobile node is preferred, by the operator of its home network, to communicate. The selection made by the mobile node pursuant to operation of an embodiment of the present invention of with which radio access to communicate pursuant to a selected communication service is selectably further dependent upon preferences accorded to one radio access network over another.

The mobile node further includes apparatus 28 of an embodiment of the present invention. The apparatus operates to select, or to facilitate selection of, the radio access network through which the mobile node communicates, such as when the mobile node roams beyond its home network or otherwise is to communicate by way of a network other than its home network. The apparatus 28, in its selection, takes into account the availability of a radio access network, the communication service capabilities of the radio access network, and the level of preference associated with the radio access network. By basing the selection on this criteria, the mobile node is less likely to attempt to communicate with a radio access network pursuant to a selected communication service that is unable to effectuate the performance of the selected communication service.

The apparatus 28 includes a storage element 32. The storage element, in the exemplary implementation, is embodied at a SIM (Subscriber Identity Module) card, the characteristics of which are otherwise conventionally utilized in GSM radio communication systems. When the mobile node is operable pursuant to another operating specification, the storage element is embodied in another manner. For instance, in another implementation, the storage element is a storage device fixedly connected to, and forming a portion of, the circuitry of the mobile node.

Values stored at the storage element define database listings, here database listings 34, 36, and 38. Each of the listings is formed of entries that identify radio access networks. Communication service capabilities are also listed in each of the lists, indexed together with the identity of the radio access network of each entry.

The apparatus further includes a selector 42 that is coupled to the receive part 22 and to the storage element 32. The connections are functionally represented by lines 44 and 46, respectively. The selector is further coupled to receive indications of when a selected communication service is to be initiated by the mobile node and the type of communication service that is to be initiated. Such indications are here represented to be provided to the selector by way of the line 48. The selector operates to select a selected radio access network with which the mobile node shall attempt to communicate pursuant to effectuation of the selected communication service. Indications of the selection are provided, here by way of the line 52, to the transmit part 24 of the mobile node to cause the transmit part to attempt to communicate with the selected radio access network. Once a communication connection is formed, the communication service is effectuated.

During operation of the mobile node, the mobile node monitors channels upon which radio access network broadcasts control signals that identify the networks from which the signals are broadcast. When a mobile node detects a signal broadcast by a network, the indication is provided by way of the line 44 to the selector 42, and the identified network is added to an available network list 56, here maintained at the selector. The available network list, in the exemplary implementation, is an aggregated list that accumulates entries on the list, identifying the detected network, together with its communication service capability, and an indication of whether the network presently appears to be available. The communication service capability of the network is, for instance, also broadcast with the broadcast signals that identify the network. Detection of the signals indicates the network to be available. If the signals are subsequently no longer detected, the available network list indicates the network to be not presently available.

When the selected communication service is to be initiated, the selector accesses the available network list and also one or more of the database listings 34, 36, etc. If an entry on the first-accessed listing identifies a radio access network that exhibits the communication service capability permitting the selected communication service to be performed and also is available, as indicated by the available network list, the selector selects such radio access network, and communications are attempted to be effectuated therewith. If no entry is contained on the first-accessed listing that is both available and is capable of providing the selected communication service, a subsequent database listing is accessed. And, the selector attempts to select a radio access network from the next-accessed listing.

In the exemplary implementation, the first listing 34 lists identities of radio access networks that are most-preferred, the second database listing 36 identifies radio access networks that are next-most-preferred. Subsequent listings, if used, identify lesser-preferred radio access networks in successive, sequential manner. And, also in the exemplary implementation, a database listing, here the database listing 38, forms a prohibited network list. Entries contained on the prohibited network list are networks with which the mobile node is prohibited from communicating. Even if available, the mobile node does not attempt to communicate by way of a network listed on the prohibited-network list.

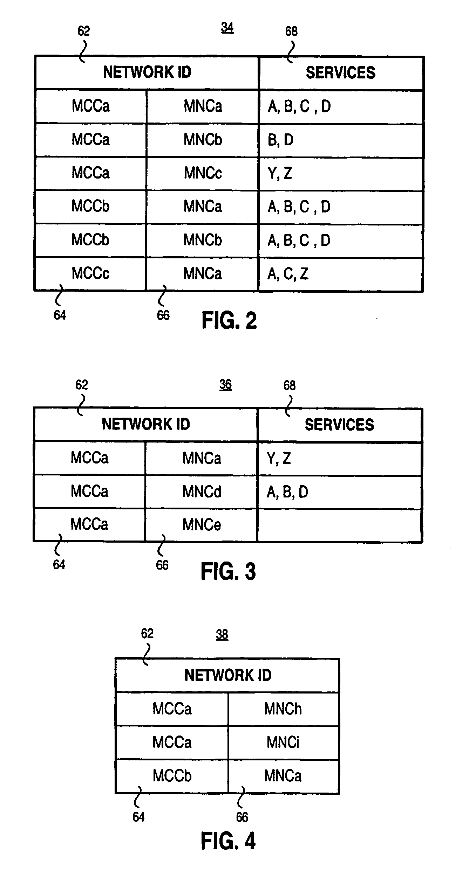

Figure 2 illustrates a representation of the listing 34, forming a portion of the apparatus 28 shown in Figure 1. The listing is of most-preferred networks that are the most-preferred networks with which the mobile node is to communicate with, if possible. The listing includes identifications 62 of radio access networks, here defined in terms of mobile country codes (MCC) 64 and a mobile network code (MNC) 66. Communication service capabilities 68 are indexed together with the identified radio access network. Here, alphabetic identifiers identify the communication service capabilities. The identifiers identify, for instance, emergency call, circuit-switched capability, voice circuit switched capability, data services capability, internet messaging capability, web browsing, weather capability, stock quote capability, etc.

Figure 3 illustrates the listing 36 that is also defined at the storage element 32 (shown in Figure 1). Here, also, the listing includes entries formed of identifiers 62 that identify the MCC 64 and MNC 66 of the network. And, again, communication service capability 68 associated with the identified network is also indexed together therewith.

Figure 4 illustrates the listing 38 of an embodiment of the present invention. The listing 38 here lists entries, also identified by identifiers 62 that identify the MCC 64 and MNC 66 of radio access networks. The list 38 forms a prohibited list that lists radio access networks with which the mobile node is prohibited from using through which to communicate. In contrast to the other listings 34 and 36, the listing 38 need not include communication service capabilities indexed together with the identifier that identifies the radio access networks forming the entries of the listing.

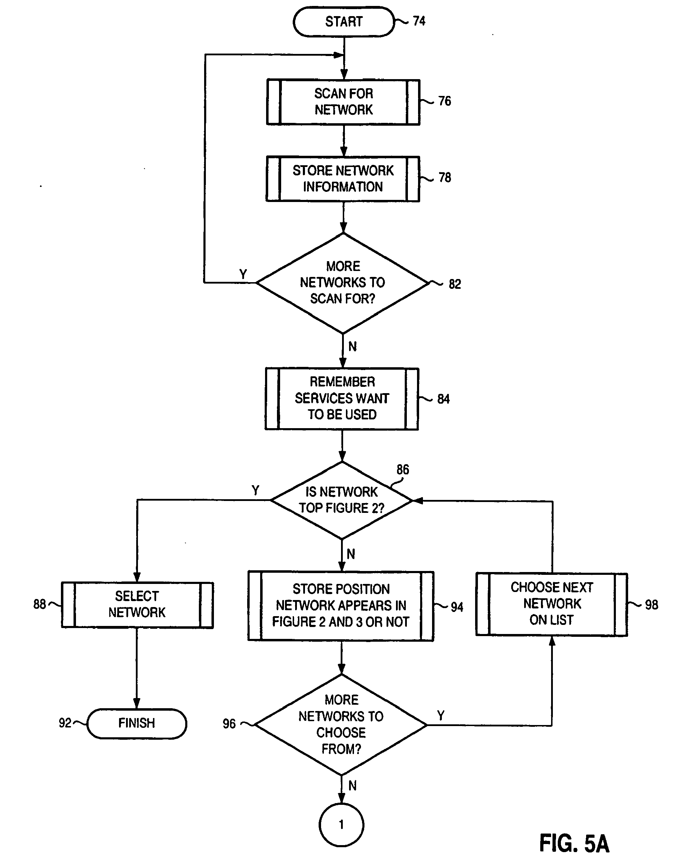

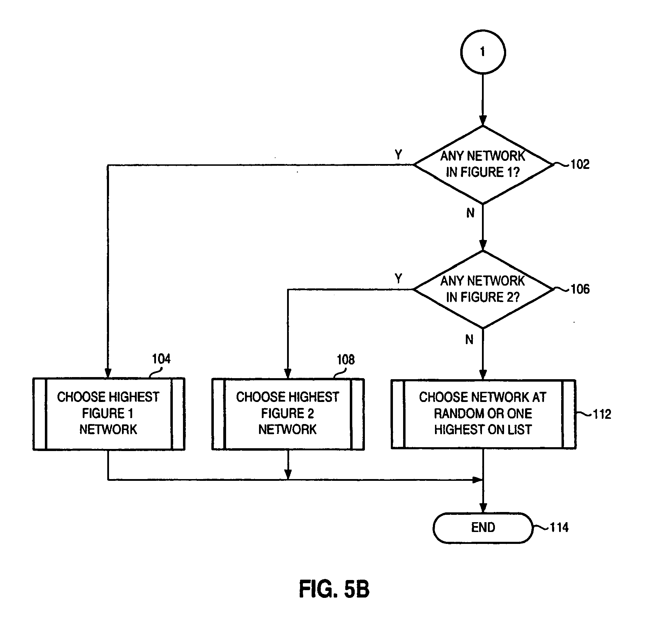

Figures 5A and 5B illustrate a flow chart, shown generally at 72, representative of operation of an embodiment of the present invention, such as operation of the apparatus 28 embodied at the mobile node. Operation commences with the START block 74.

First, and as indicated by the block 76, channels upon which radio access networks broadcast control information are scanned to detect broadcast signals broadcast thereon. Network information contained in the broadcast signals detected during the scanning operations is extracted and stored at a mobile-node table. Then, as indicated by the block 78, network information is stored.

Then, and as indicated at the decision block 82, a determination is made as to other additional scanning should be performed to detect signals broadcast by other networks. If yes, the YES branch is taken back to the block 76. Otherwise, the NO branch is taken to the block 84. At the block 84, services that are desired to be used are remembered. Then, a path is taken to the decision block 86.

At the decision block 86, a determination is made as to whether the network is a network identified in a listing of most-preferred networks. If so, the YES branch is taken to the block 88, and the network is selected as the network with which to communicate. And, a path is taken to the finish block 92. If, conversely, the network is not listed in the most-preferred listing, the NO branch is taken to the block 94 and an indication of a position in a listing of most-preferred or otherwise available networks is stored or, if the identity of the network is not stored in one of such listings, such information is analogously also stored.

A branch is taken to the block 96, and a determination is made as to whether there are additional networks from which to choose. If so, the YES branch is taken to the block 98, and a subsequent network on the list is chosen and a path is taken back to the decision block 86.

If, conversely, a determination is made at the decision block 96 that additional networks from which to chose are not available, the NO branch is taken to the decision block 102. At the decision block 102, a determination is made as to whether any of the networks, such as those shown in Figure 1, are available. If so, the YES branch is taken to the block 104, and selection is made of a highest network listed in the Figure. Otherwise, the NO branch is taken to the decision block 106. At the decision block 106, a determination is made as to whether any of the networks are listed in the listing shown in Figure 2. If so, the YES branch is taken to the block 108, and selection is made from the listing 34 that identifies the most-preferred networks. Selection is made of the highest-listed network in the listing. Conversely, if a determination is made at the decision block 106 that none of the identified networks are listed in the most-preferred listing, the NO branch is taken to the block 112. At the block 112, a network is chosen in another manner, such as by random, or otherwise most-favorably listed. Upon selection of a network at any of the blocks 104, 108, or 112, a path is taken to the end block 114.

Thereby, the selection is made of the available network that provides the selected communication service. And, by utilizing lists that define preference levels, and successively accessing the, if needed, successive ones of the lists, selection is made of the most-preferred, available network that provides the selected communication service.

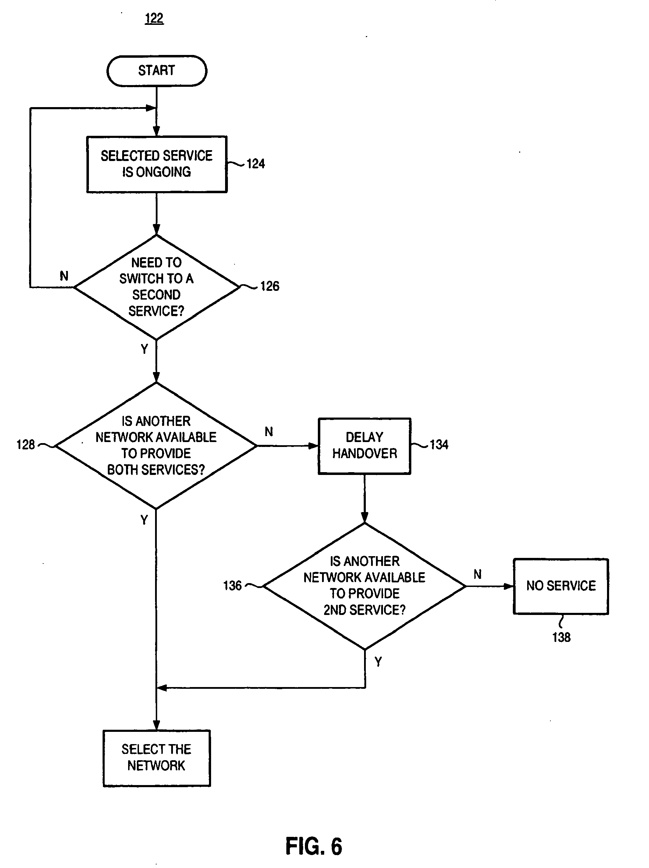

Figure 6 illustrates a flow diagram 122, representative of further operation of an embodiment of the present invention. Here, a selected communication service is ongoing, as indicated by the block 124. As the mobile node is mobile, the mobile node might be traveling out of one coverage area and into another coverage area. And, a second communication service might be also initiated. If a second communication service is initiated while a first communication service is ongoing, a preferred mode of operation is to hand over communications to a radio access network that is capable of continuing the first communication service and also providing the second communication service.

Accordingly, pursuant to an embodiment of the present invention, a determination is made as indicated by the decision block 126 as to whether there is a need to perform the second communication service. If not, the NO branch is taken back to the block 124. Otherwise, the YES branch is taken to the decision block 128.

At the decision block 128, a determination is made as to whether another network is available to provide both the ongoing as well as the second selected communication service. A process, analogous to the process shown in 72, is performed, for instance, at the decision block128, to make such determination. If another network is available, the YES branch is taken to the block 132 and the network is selected for the continuance of communications pursuant to the first communication service and pursuant to which effectuation of the second communication service is performed. Otherwise, the NO branch is taken to the block 134. At the block 134, the handover is delayed until the completion of the first communication service, and a determination is then made, as indicated by the decision block 136, as to whether a network is available to perform the second communication service. If so, the YES branch is taken to the block 132, and communications are attempted with the selected network. Otherwise, service is unavailable and a branch is taken to the block 138 indicative of no service.

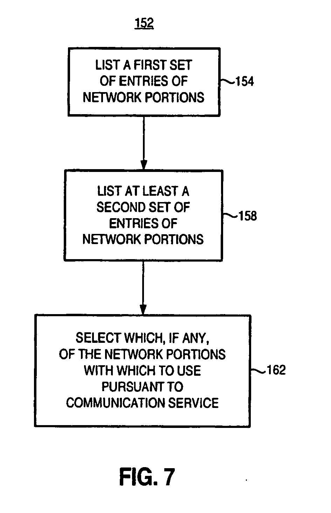

Figure 7 illustrates a method flow diagram, shown generally at 152, of the method of operation of an embodiment of the present invention. The method facilitates selection, at a mobile node, with which, if any, of a first and at least second network portion, of a network of a radio communication system with which to effectuate a first selected communication service.

First, and as indicated by the block 154, a first set of entries of network portions is listed. Each entry of the first set of entries is associated with a first level of preference by the mobile node with which to communicate. And, as indicated by the block 158, at least a second set of network portions is listed. Each entry of the second set of entries identifies network portions associated with a second level of preference by the mobile node with which to communicate.

Then, and as indicated by the block 162, selection is made of with which, if any, of the first and at least second network portions to effectuate the first selected communication service. Selection is made responsive to which, if any, of the first and at least second sets of communication services that the first selected communication service is a member and also with which of the first and at least second sets of entries that an associated one of the first and at least second network portions is associated.

Thereby, the mobile node attempts to communicate with radio access networks that available, are able to provide the selected communication service, and are preferred in at least selected tiers of service.

The previous descriptions are of preferred examples for implementing the invention, and the scope of the invention should not necessarily be limited by this description. The scope of the present invention is defined by the following claims.

## Claims

1. Apparatus (28) for a mobile node (12) operable to effectuate at least a first selected communication service with a selected available network (14,18) portion of a network formed of a first network portion and at least a second network portion, the first network portion capable of performing a first set of communication services and the at least the second network portion capable of performing a second set of communication services, said apparatus (28) for facilitating selection, at the mobile node (12), with which, if any, of the first and at least second network portions to effectuate the first selected communication service, said apparatus comprising:
a first database (34) listing identifying a first set of entries of network portions, each entry of the first set of entries associated with a first level of preference by the mobile node with which to communicate;
at least a second database (36) listing identifying at least a second set of entries of network portions, each entry of the second set of entries identifying network portions associated with a second level of preference by the mobile node with which to communicate;
an available network list (56) listing in which, if any, of the first and at least second network portions, respectively, in whose coverage area that the mobile node is positioned;
a selector (42) adapted to receive indications of when the mobile node (12) is within coverage areas of the first and at least second network portions and adapted to access said first and at least second database listings, respectively, said selector (42) for selecting with which, if any, of the first and at least second network portions to effectuate the first selected communication service, selection made by said selector (42) responsive to which, if any, of the first and at least second sets of communication services that the first selected communication service is a member, with which of said first and at least second databases (34,36) that an associated one of the first and at least second network portions is associated, and responsive to which of the first and at least second network portions is listed in the available network list (56).

2. The apparatus (28) of claim 1 wherein said at least the second database listing (36) comprises the second database listing (36) and at least a third database listing (38), the third database (38) listing a third list of entries of network portions, each entry of the third set of entries identifying network portions associated with a third level of preference by the mobile node (12) with which to communicate.

3. The apparatus (28) of claim 2 wherein said selector (42) is further adapted for selecting with which, if any, of the first and at least second network portions to effectuate the first selected communication service responsive to with which of said first, second, and third databases (34, 36, 38), respectively, that an associated one of the first and at least second network portions is associated.

4. The apparatus (28) of claim 1 further comprising a forbidden-list database (38) listing a forbidden-list of entries of network portions, each entry of the forbidden-list of entries identifying network portions associated with a prohibition level of non-preference by the mobile node (12) indicating the mobile node (12) to be prohibited from communicating with any network portion entered on the forbidden list of entries.

5. The apparatus (28) of claim 4 wherein said selector (42) is further adapted for selecting with which, if any, of the first and at least second network portions to effectuate the first selected communication service responsive to whether any of the first and at least second network portions is entered at said forbidden-list database (38).

6. The apparatus (28) of claim 1 wherein each entry listed in said first database listing (34) further includes indications of the first set and at least second set, respectively, of communication services, as appropriate, associated therewith with which the entry is capable of providing.

7. The apparatus (28) of claim 6 wherein the indications of the first set and at least second set of communication services identify each communication service forming, respectively, the first set and the at least the second set.

8. The apparatus (28) of claim 7 wherein said selector (42) is further adapted for selecting responsive to determination of whether the first selected communication service is identified in any of the first and at least second sets of communication services associated with entries contained in at least said first database listing (34).

9. The apparatus (28) of claim 8 wherein said selector (42) comprises a determiner for determining whether the first selected communication service is identified in any of the first and at least second sets of communication services associated with entries contained in at least said first database listing (34).

10. The apparatus (28) of claim 9 wherein the determiner is adapted to selectably further determine whether the first selected communication service is identified in any of the first and at least second sets of communication services associated with entries contained in at least said second database listing (36) upon determination that the selected communication service fails to form a portion of any of the first and at least second sets of communication services associated with entries forming said first database listing (34).

11. The apparatus (28) of claim 6 wherein groups of communication services define tiers of network-portion capabilities, and wherein the indications of the communication services associated with each entry in said first database listing (34) comprise identification of which tier of network-portion capability is associated therewith.

12. The apparatus (28) of claim 11 wherein said selector (42) is adapted to make a selection responsive to determinations of whether the tiers of service associated with any entry of said first database listing comprises a tier that includes the first selected communication service.

13. The apparatus (28) of claim 11 wherein said selector comprises a determiner for determining whether the first selected communication service is identified in any of the tiers defining any of the first and at least second sets of communication services associated with entries contained in at least said first database listing (34).

14. The apparatus (28) of claim 13 wherein the determiner is adapted to selectably further determine whether the first selected communication service is identified in any of the tiers defining any of the first and at least second sets of communication services associated with entries contained in at least said second database listing (36).

15. The apparatus (28) of claim 1 further comprising a detector for detecting when the mobile node is positioned within coverage area of the first network portion and within coverage area of the at least the second network portion and wherein said selector is adapted to receive indications of detections made by said detector.

16. A method (152) of communicating in a radio communication system having a mobile node operable to effectuate at least a first selected communication service with a selected available network portion of a network formed of a first network portion and at least a second network portion, the first network portion capable of performing a first set of communication services and the at least the second network portion capable of performing a second set of communication services, said method (152) for facilitating selection, at the mobile node with which, if any, of the first and at least second network portion to effectuate the first selected communication service, said method (152) comprising the operations of:
listing (154) a first set of entries of network portions, each entry of the first set of entries associated with a first level of preference by the mobile node with which to communicate;
listing (158) at least a second set of entries of network portions, each entry of the second set of entries identifying network portions associated with a second level of preference by the mobile node with which to communicate;
listing in which , if any, of the first and at least second network portions, respectively, in whose coverage area that the mobile node is positioned,
selecting (162) with which, if any, of the first and at least second network portions to effectuate the first selected communication service, selection made responsive to which, if any, of the first and at least second sets of communication services that the first selected communication service is a member, with which of the first and at least second sets of entries that an associated one of the first and at least second network portions is associated, and in which of the first and at least second network portion in whose coverage area that the mobile node is listed to be positioned.

17. The method (152) of claim 16 wherein selection is made during said operation of selecting (162) of an entry listed on the first set of entries if any entry is associated with a set of communication services of which the first selected communication service forms a portion.

18. The method (152) of claim 17 wherein selection is made during said operation of selecting (162) of an entry listed on the at least second set of entries if no entry of the first set of entries is associated with a set of communication services of which the first selected communication service forms a portion.

19. The method (152) of claim 16 wherein said operation of selecting (162) further comprises the operation of subsequently selecting another network portion to effectuate a second selected communication service.

## Patentansprüche

1. Vorrichtung (28) für einen mobilen Knoten (12), der betriebsfähig ist, zumindest einen ersten ausgewählten Kommunikationsdienst mit einem ausgewählten verfügbaren Netzwerk(14, 18)-Teil eines Netzwerks zu bewirken, das aus einem ersten Netzwerkteil und zumindest einem zweiten Netzwerkteil besteht, wobei das erste Netzwerkteil fähig ist zur Durchführung eines ersten Satzes von Kommunikationsdiensten und das zumindest zweite Netzwerkteil fähig ist zur Durchführung eines zweiten Satzes von Kommunikationsdiensten, wobei die Vorrichtung (28) zur Erleichterung einer Auswahl an dem mobilen Knoten (12) ist, mit welchen, wenn vorhanden, der ersten und zumindest zweiten Netzwerkteile der erste ausgewählte Kommunikationsdienst zu bewirken ist, wobei die Vorrichtung aufweist:
eine erste Datenbank(34)-Auflistung, die einen ersten Satz von Einträgen von Netzwerkteilen identifiziert, wobei jeder Eintrag des ersten Satzes von Einträgen zu einem ersten Präferenzgrad durch den mobilen Knoten gehört, mit wem zu kommunizieren ist;
zumindest eine zweite Datenbank(36)-Auflistung, die zumindest einen zweiten Satz von Einträgen von Netzwerkteilen identifiziert, wobei jeder Eintrag des zweiten Satzes von Einträgen Netzwerkteile identifiziert, die zu einem zweiten Präferenzgrad durch den mobilen Knoten gehören, mit wem zu kommunizieren ist;
eine verfügbare Netzwerkliste(56)-Auflistung, in welchen, wenn vorhanden, der ersten und zumindest zweiten Netzwerkteile jeweils in deren Abdeckungsbereich der mobile Knoten positioniert ist;
einen Selektor (42), der ausgebildet ist, Anzeigen zu empfangen, wenn sich der mobile Knoten (12) in Abdeckungsbereichen der ersten und zumindest zweiten Netzwerkteile befindet, und ausgebildet ist, jeweils auf die ersten und zumindest zweiten Datenbank-Auflistungen zuzugreifen, wobei der Selektor (42) zur Auswahl ist, mit welchen, wenn vorhanden, der ersten und zumindest zweiten Netzwerkteilen der erste ausgewählte Kommunikationsdienst zu bewirken ist, wobei die Auswahl durch den Selektor (42) gemacht wird als Reaktion darauf, von welchen, wenn vorhanden, der ersten und zumindest zweiten Sätze von Kommunikationsdiensten der erste ausgewählte Kommunikationsdienst ein Mitglied ist, zu welchen der ersten und zumindest zweiten Datenbanken (34, 36) ein zugehöriger der ersten und zumindest zweiten Netzwerkteile gehört, und als Reaktion darauf, welcher der ersten und zumindest zweiten Netzwerkteile in der verfügbaren Netzwerk-Liste (56) aufgelistet ist.

2. Vorrichtung (28) gemäß Anspruch 1, wobei die zumindest zweite Datenbank-Auflistung (36) die zweite Datenbank-Auflistung (36) und zumindest eine dritte Datenbank-Auflistung (38) aufweist, wobei die dritte Datenbank(38)-Auflistung eine dritte Liste von Einträgen von Netwerkteilen ist, wobei jeder Eintrag des dritten Satzes von Einträgen Netzwerkteile identifiziert, die zu einem dritten Grad an Präferenz durch den mobilen Knoten (12) gehören, mit dem zu kommunizieren ist.

3. Vorrichtung (28) gemäß Anspruch 2, wobei der Selektor (42) weiter ausgebildet ist zur Auswahl, mit welchen, wenn vorhanden, der ersten und zumindest zweiten Netzwerkteilen den ersten ausgewählten Kommunikationsdienst zu bewirken als Reaktion darauf, zu welchen der jeweils ersten, zweiten und dritten Datenbanken (34, 36, 38) ein zugehöriger der ersten und zumindest zweiten Netzwerkteile gehört.

4. Vorrichtung (28) gemäß Anspruch 1, die weiter aufweist eine Verbotene-Liste-Datenbank (38), die eine verbotene Liste von Einträgen von Netzwerkteilen auflistet, wobei jeder Eintrag der verbotenen Liste von Einträgen Netzwerkteile identifiziert, die zu einem Verbots-Grad einer Nicht-Präferenz durch den mobilen Knoten (12) gehören, der anzeigt, dass der mobile Knoten (12) nicht mit einem Netzwerkteil kommunizieren darf, der in die verbotene Liste von Einträgen eingetragen ist.

5. Vorrichtung (28) gemäß Anspruch 4, wobei der Selektor (42) weiter ausgebildet ist zur Auswahl mit welchen, wenn vorhanden, der ersten und zumindest zweiten Netzwerkteilen den ersten ausgewählten Kommunikationsdienst zu bewirken als Reaktion darauf, ob einer der ersten und zumindest zweiten Netzwerkteile in der Verbotenen-Liste-Datenbank (38) eingetragen ist.

6. Vorrichtung (28) gemäß Anspruch 1, wobei jeder Eintrag, der in der ersten Datenbank-Auflistung (34) eingetragen ist, weiter umfasst jeweils Anzeigen des ersten Satzes und des zumindest zweiten Satzes von Kommunikationsdiensten, wie geeignet, die dazu gehören, mit denen der Eintrag liefern kann.

7. Vorrichtung (28) gemäß Anspruch 6, wobei die Anzeigen des ersten Satzes und des zumindest zweiten Satzes von Kommunikationsdiensten jeden Kommunikationsdienst identifizieren, der jeweils den ersten Satz und den zumindest zweiten Satz bildet.

8. Vorrichtung (28) gemäß Anspruch 7, wobei der Selektor (42) weiter ausgebildet ist zur Auswahl als Reaktion auf eine Bestimmung, ob der erste ausgewählte Kommunikationsdienst identifiziert wird in einem der ersten und zumindest zweiten Sätze von Kommunikationsdiensten, die zu Einträgen gehören, die in zumindest der ersten Datenbank-Auflistung (34) enthalten sind.

9. Vorrichtung (28) gemäß Anspruch 8, wobei der Selektor (42) einen Bestimmer aufweist zum Bestimmen, ob der erste ausgewählte Kommunikationsdienst identifiziert wird in einem der ersten und zumindest zweiten Sätze von Kommunikationsdiensten, die zu Einträgen gehören, die in zumindest der ersten Datenbank-Auflistung (34) enthalten sind.

10. Vorrichtung (28) gemäß Anspruch 9, wobei der Bestimmer ausgebildet ist, wählbar weiter zu bestimmen, ob der erste ausgewählte Kommunikationsdienst identifiziert wird in einem der ersten und zumindest zweiten Sätze von Kommunikationsdiensten, die zu Einträgen gehören, die in zumindest der zweiten Datenbank-Auflistung (36) enthalten sind, bei Bestimmung, dass der ausgewählte Kommunikationsdienst fehlschlägt, einen Teil von einem der ersten und zumindest zweiten Sätze von Kommunikationsdiensten durchzuführen, die zu Einträgen gehören, welche die erste Datenbank-Auflistung (34) bilden.

11. Vorrichtung (28) gemäß Anspruch 6, wobei Gruppen von Kommunikationsdiensten Schichten von Netzwerkteil-Fähigkeiten definieren und wobei die Anzeigen der Kommunikationsdienste, die zu jedem Eintrag in der ersten Datenbank-Auflistung (34) gehören, eine Identifikation aufweisen, welche Schicht einer Netzwerkteil-Fähigkeit dazu gehört.

12. Vorrichtung (28) gemäß Anspruch 11, wobei der Selektor (42) ausgebildet ist, eine Auswahl zu treffen als Reaktion auf Bestimmungen, ob die Schichten von Diensten, die zu Einträgen der ersten Datenbank-Auflistung gehören, eine Schicht aufweisen, die den ersten ausgewählten Kommunikationsdienst umfasst.

13. Vorrichtung (28) gemäß Anspruch 11, wobei der Selektor einen Bestimmer aufweist zum Bestimmen, ob der erste ausgewählte Kommunikationsdienst in einer der Schichten identifiziert wird, die einen der ersten und zumindest zweiten Sätze von Kommunikationsdiensten definieren, die zu Einträgen gehören, die in zumindest der ersten Datenbank-Auflistung (34) enthalten sind.

14. Vorrichtung (28) gemäß Anspruch 13, wobei der Bestimmer ausgebildet ist, wählbar weiter zu bestimmen, ob der erste ausgewählte Kommunikationsdienst in einer der Schichten identifiziert wird, die einen der ersten und zumindest zweiten Sätze von Kommunikationsdiensten definieren, die zu Einträgen gehören, die in zumindest der zweiten Datenbank-Auflistung (36) enthalten sind.

15. Vorrichtung (28) gemäß Anspruch 1, die weiter aufweist einen Detektor zum Erfassen, ob der mobile Knoten in einem Abdeckungsbereich des ersten Netzwerkteils und in einem Abdeckungsbereich des zumindest zweiten Netzwerkteils positioniert ist, und wobei der Selektor ausgebildet ist, Anzeigen von Erfassungen zu empfangen, die durch den Detektor gemacht wurden.

16. Verfahren (152) zum Kommunizieren in einem Funkkommunikationssystem mit einem mobilen Knoten, der betriebsfähig ist, zumindest einen ersten ausgewählten Kommunikationsdienst mit einem ausgewählten verfügbaren Netzwerkteil eines Netzwerks zu bewirken, das aus einem ersten Netzwerkteil und zumindest einem zweiten Netzwerkteil besteht, wobei das erste Netzwerkteil fähig ist zur Durchführung eines ersten Satzes von Kommunikationsdiensten und das zumindest zweite Netzwerkteil fähig ist zur Durchführung eines zweiten Satzes von Kommunikationsdiensten, wobei das Verfahren (152) zur Erleichterung einer Auswahl an dem mobilen Knoten vorgesehen ist, mit welchen, wenn vorhanden, der ersten und zumindest zweiten Netzwerkteile der erste ausgewählte Kommunikationsdienst zu bewirken ist, wobei das Verfahren (152) die Operationen aufweist:
Auflisten (154) eines ersten Satzes von Einträgen von Netzwerkteilen, wobei jeder Eintrag des ersten Satzes von Einträgen zu einem ersten Präferenzgrad durch den mobilen Knoten gehört, mit wem zu kommunizieren ist;
Auflisten (158) zumindest eines zweiten Satzes von Einträgen von Netzwerkteilen, wobei jeder Eintrag des zweiten Satzes von Einträgen Netzwerkteile identifiziert, die zu einem zweiten Präferenzgrad durch den mobilen Knoten gehören, mit wem zu kommunizieren ist;
Auflisten, in welchen, wenn vorhanden, der ersten und zumindest zweiten Netzwerkteile jeweils in deren Abdeckungsbereich der mobile Knoten positioniert ist;
Auswählen (162) mit welchen, wenn vorhanden, der ersten und zumindest zweiten Netzwerkteile der erste ausgewählte Kommunikationsdienst zu bewirken ist, wobei die Auswahl gemacht wird als Reaktion darauf, von welchen, wenn vorhanden, der ersten und zumindest zweiten Sätze von Kommunikationsdiensten der erste ausgewählte Kommunikationsdienst ein Mitglied ist, zu welchen der ersten und zumindest zweiten Sätze von Einträgen ein zugehöriger der ersten und zumindest zweiten Netzwerkteile gehört, und in welchen der ersten und zumindest zweiten Netzwerkteile, in deren Abdeckungsbereich der mobile Knoten aufgelistet ist, positioniert zu sein.

17. Verfahren (152) gemäß Anspruch 16, wobei eine Auswahl getroffen wird während der Operation der Auswahl (162) eines Eintrags, der in dem ersten Satz von Einträgen aufgelistet ist, wenn ein Eintrag zu einem Satz von Kommunikationsdiensten gehört, von denen der erste ausgewählte Kommunikationsdienst einen Teil bildet.

18. Verfahren (152) gemäß Anspruch 17, wobei eine Auswahl getroffen wird während der Operation der Auswahl (162) eines Eintrags, der in dem zumindest zweiten Satz von Einträgen aufgelistet ist, wenn kein Eintrag des ersten Satzes von Einträgen zu einem Satz von Kommunikationsdiensten gehört, von denen der erste ausgewählte Kommunikationsdienst einen Teil bildet.

19. Verfahren (152) gemäß Anspruch 16, wobei die Operation der Auswahl (162) weiter aufweist die Operation eines nachfolgenden Auswählens eines anderen Netzwerkteils, um einen zweiten ausgewählten Kommunikationsdienst zu bewirken.

## Revendications

1. Appareil (28) pour un noeud mobile (12) en mesure d'exécuter au moins un premier service de communication avec une portion de réseau accessible sélectionnée (14, 18), appartenant à un réseau formé d'une première portion de réseau et d'au moins une deuxième portion de réseau, la première portion de réseau étant en mesure de fournir un premier ensemble de services de communication et ladite au moins une deuxième portion de réseau étant en mesure de fournir un deuxième ensemble de services de communication, ledit appareil (28) étant destiné à faciliter la sélection sur le noeud mobile (12) de celle desdites première et au moins une deuxième portions de réseau avec laquelle effectuer éventuellement le premier service de communication sélectionné, ledit appareil comprenant :
une première liste de base de données (34) identifiant un premier ensemble de rubriques de portions de réseau, chaque rubrique du premier ensemble de rubriques étant associée par le noeud mobile à un premier niveau de préférence de communication ;
au moins une deuxième liste de base de données (36) identifiant un deuxième ensemble de rubriques de portions de réseau, chaque rubrique du deuxième ensemble de rubriques identifiant des portions de réseau associées par le noeud mobile à un deuxième niveau de préférence de communication ;
une liste de réseaux accessibles (56) qui énumère les portions, parmi les première et au moins une deuxième portions de réseau, respectivement, dans la zone de couverture desquelles se trouve éventuellement le noeud mobile ;
un sélecteur (42) conçu pour recevoir des indications des instants où le noeud mobile (12) se trouve dans les zones de couverture des première et au moins une deuxième portions de réseau et conçu pour accéder auxdites première et deuxième listes de bases de données, respectivement, ledit sélecteur (42) étant destiné à sélectionner la portion, parmi les première et au moins une deuxième portions de réseau, respectivement, avec laquelle exécuter éventuellement le premier service de communication sélectionné, la sélection opérée par ledit sélecteur (42) découlant de celui des ensembles, sur les premier et au moins un deuxième ensembles de services de communication, dont le premier service de communication sélectionné est membre, en fonction de la base de données, parmi lesdites première et au moins une deuxième bases de données (34, 36), avec laquelle est associée une portion associée sur lesdites première et au moins une deuxième portions de réseau et découlant de la portion, sur lesdites première et au moins une deuxième portions de réseau, qui est énumérée dans la liste des réseaux accessibles (56).

2. Appareil (28) selon la revendication 1, dans lequel ladite au moins une deuxième liste de base de données (36) comprend la deuxième liste de base de données (36) et au moins une troisième liste de base de données (38), la troisième base de données (38) énumérant une troisième liste de rubriques de portions de réseau, chaque rubrique du troisième ensemble de rubriques identifiant des portions de réseau associées par le noeud mobile à un troisième niveau de préférence de communication.

3. Appareil (28) selon la revendication 2, dans lequel ledit sélecteur (42) est en outre conçu pour sélectionner avec quelle portion, sur les première et au moins une deuxième portions de réseau, exécuter éventuellement le premier service de communication sélectionné, en fonction de la base de données, parmi lesdites première, deuxième et troisième bases de données (34, 36, 38), respectivement, avec laquelle est associée une portion associée parmi lesdites première et au moins une deuxième portions de réseau.

4. Appareil (28) selon la revendication 1, comprenant en outre une base de données interdite (38) constituant une liste de rubriques de portions de réseau interdites, chacune des rubriques, dans la liste de rubriques interdites, identifiant des portions de réseau associées par le noeud mobile (12) à un niveau de non-préférence ou interdiction, qui indique qu'il est interdit au noeud mobile (12) de communiquer avec l'une des portions de réseau énumérée dans la liste des rubriques interdites.

5. Appareil (28) selon la revendication 4, dans lequel ledit sélecteur (42) est en outre conçu pour sélectionner la portion, sur lesdites première et au moins une deuxième portions de réseau, avec laquelle exécuter éventuellement le premier service de communication sélectionné en fonction du fait que l'une des portions, parmi lesdites première et au moins une deuxième portions de réseau, est inscrite dans ladite base de données interdite (38).

6. Appareil (28) selon la revendication 1, dans lequel chaque rubrique inscrite dans ladite première liste de base de données (34) comprend en outre des indications sur les premier et au moins un deuxième ensembles de services de communication, respectivement, suivant le cas, qui sont associés à celle-ci et que la rubrique est en mesure de fournir.

7. Appareil (28) selon la revendication 6, dans lequel les indications sur le premier ensemble et ledit au moins un deuxième ensemble de services de communication identifient chacun des services de communication qui forment le premier ensemble et ledit au moins un deuxième ensemble, respectivement.

8. Appareil (28) selon la revendication 7, dans lequel ledit sélecteur (42) est en outre conçu pour opérer la sélection en fonction du fait que le premier service de communication sélectionné a été identifié comme un élément du premier et du au moins un deuxième ensemble de services de communication qui sont associés à des rubriques contenues dans au moins ladite première liste de base de données (34).

9. Appareil (28) selon la revendication 8, dans lequel ledit sélecteur (42) comprend un déterminateur destiné à déterminer si le premier service de communication sélectionné est identifié dans l'un des premier et au moins un deuxième ensembles de services de communication, associés à des rubriques contenues dans au moins ladite première liste de base de données (34).

10. Appareil (28) selon la revendication 9, dans lequel le déterminateur est conçu pour déterminer en outre sélectivement si le premier service de communication sélectionné est identifié dans l'un des premier et au moins un deuxième ensembles de services de communication associés à des rubriques contenues dans au moins ladite deuxième liste de base de données (36) après qu'il a été déterminé que le service de communication sélectionné ne fait pas partie des premier et au moins un deuxième ensembles de services de communication associés à des rubriques formant ladite première liste de base de données (34).

11. Appareil (28) selon la revendication 6, dans lequel des groupes de services de communication définissent des niveaux de capacités de portions de réseau et dans lequel les indications des services de communication associés à chaque rubrique dans ladite liste de base de données (34) comprennent une identification du niveau de capacités de la portion de réseau qui est associée à celle-ci.

12. Appareil (28) selon la revendication 11, dans lequel ledit sélecteur (42) est conçu pour opérer une sélection en fonction du fait que les niveaux de service associés à une rubrique de ladite première liste de base de données comprennent un niveau qui inclut le premier service de communication sélectionné.

13. Appareil (28) selon la revendication 11, dans lequel ledit sélecteur comprend un déterminateur destiné à déterminer si le premier service de communication sélectionné est identifié dans l'un quelconque des niveaux qui définissent l'un des premier et au moins un deuxième ensembles de services de communication associés à des rubriques contenues dans au moins ladite première liste de base de données (34).

14. Appareil (28) selon la revendication 13, dans lequel le déterminateur est conçu pour déterminer en outre sélectivement si le premier service de communication sélectionné est identifié dans l'un des niveaux définissant l'un des premier et au moins un deuxième ensembles de services de communication associés à des rubriques contenues dans au moins ladite deuxième liste de base de données (36).

15. Appareil (28) selon la revendication 1, comprenant en outre un détecteur destiné à détecter lorsque le noeud mobile se trouve dans une zone de couverture de la première portion de réseau et dans une zone de couverture de ladite au moins une deuxième portion de réseau et dans lequel ledit sélecteur est conçu pour recevoir des indications des détections opérées par ledit détecteur.

16. Procédé (152) de communication dans un système de communication radio possédant un noeud mobile en mesure d'exécuter au moins un premier service de communication avec une portion de réseau accessible sélectionnée appartenant à un réseau formé d'une première portion de réseau et d'au moins une deuxième portion de réseau, la première portion de réseau étant en mesure de fournir un premier ensemble de services de communication et ladite au moins une deuxième portion de réseau étant en mesure de fournir un deuxième ensemble de services de communication, ledit procédé (152) étant destiné à faciliter la sélection sur le noeud mobile de celle desdites première et au moins une deuxième portions de réseau avec laquelle effectuer éventuellement le premier service de communication sélectionné, ledit procédé (152) comprenant les opérations consistant à :
énumérer (154) un premier ensemble de rubriques de portions de réseau, chaque rubrique du premier ensemble de rubriques étant associée par le noeud mobile à un premier niveau de préférence de communication ;
énumérer (158) un deuxième ensemble de rubriques de portions de réseau, chaque rubrique du deuxième ensemble de rubriques identifiant des portions de réseau associées par le noeud mobile à un deuxième niveau de préférence de communication ;
énumérer les portions, parmi les première et au moins une deuxième portions de réseau, respectivement, dans la zone de couverture desquelles se trouve éventuellement le noeud mobile ;
sélectionner (162) la portion, parmi les première et au moins une deuxième portions de réseau, respectivement, avec laquelle exécuter éventuellement le premier service de communication sélectionné, la sélection étant opérée en fonction de celui des ensembles, sur les premier et au moins un deuxième ensembles de services de communication, dont le premier service de communication sélectionné est membre, en fonction de l'ensemble parmi les premier et au moins un deuxième ensembles de rubriques, avec lequel est associée une portion associée sur lesdites première et au moins une deuxième portions de réseau et en fonction de la portion, sur lesdites première et au moins une deuxième portions de réseau, dans la zone de couverture de laquelle le noeud mobile est indiqué.

17. Procédé (152) selon la revendication 16, dans lequel la sélection est opérée pendant ladite opération de sélection (162) d'une rubrique énumérée dans le premier ensemble de rubriques si l'une quelconque des rubriques est associée à un ensemble de services de communication dont fait partie le premier service de communication sélectionné.

18. Procédé (152) selon la revendication 17, dans lequel la sélection est opérée pendant ladite opération de sélection (162) d'une rubrique énumérée dans ledit au moins un deuxième ensemble de rubriques si aucune des rubriques du premier ensemble de rubriques n'est associée à un ensemble de services de communication dont fait partie le premier service de communication sélectionné.

19. Procédé (152) selon la revendication 16, dans lequel ladite opération de sélection (162) comprend en outre l'opération consistant à sélectionner ultérieurement une autre portion de réseau afin d'exécuter un deuxième service de communication sélectionné.
